# EUROPEAN PATENT APPLICATION

(11) **EP 4 769 092 A1**
(43) Date of publication of application: **01.07.2026**
(21) Application number: 25824735.2
(22) Date of filing: 09.05.2025
(51) Int. Cl.: G06F 3/041

(54) **TOUCH PANEL COORDINATE DATA REPORTING METHOD, DEVICE, AND STORAGE MEDIUM**

(30) Priority: 25.06.2024 CN 202410836398
(71) Applicant: Honor Device Co., Ltd., Shenzhen, Guangdong 518040 (CN)
(72) Inventor: MU, Weihu, Shenzhen, Guangdong 518040 (CN)
(74) Representative: Henselmann, Alexander Gerhard
(86) International application number: PCT/CN2025/093928
(87) International publication number: WO 2026/001347

(57) **Abstract**

This application provides a touchscreen coordinate data reporting method, a device, and a storage medium. In the method, in a sliding operation scenario, filtering is performed on a plurality of pieces of coordinate data collected by a touchscreen based on a timestamp of a data transmission signal sent by a target application, and coordinate data obtained through filtering is sent to the target application, thereby reducing a step of resampling the plurality of pieces of coordinate data by the target application, improving performance of the electronic device, reducing power consumption of the electronic device, and improving user experience.

## Description

This application claims priority to Chinese Patent Application No. 202410836398.6, filed with the China National Intellectual Property Administration on June 25, 2024 and entitled "TOUCHSCREEN COORDINATE DATA REPORTING METHOD, DEVICE, AND STORAGE MEDIUM", which is incorporated herein by reference in its entirety.

### TECHNICAL FIELD

This application relates to the field of mobile phones, and in particular, to a touchscreen coordinate data reporting method, a device, and a storage medium.

### BACKGROUND

With update and iteration of an electronic device, a user currently can implement interaction with the electronic device by inputting a touch operation to a touchscreen of the electronic device. A touch sensor in the touchscreen (touch panel, TP) receives the touch operation input by the user, and the touch sensor may trigger a touchscreen driver to perform scanning to obtain a touch parameter generated by the touch operation. A quantity of times that the touchscreen driver scans per unit time may be referred to as a TP sampling rate. Generally, a higher TP sampling rate indicates better touch responsiveness of the TP.

In some sliding operation scenarios, the electronic device continuously obtains touch parameters, and performs coordinate calculation and data reporting for each touch parameter. Consequently, the device may be continuously in a high power consumption state, and even the electronic device may become "hot to the touch" during use. Therefore, how to reduce power consumption of the electronic device in a sliding operation scenario is an urgent problem to be solved.

### SUMMARY

Embodiments of this application provide a touchscreen coordinate data reporting method, a device, and a storage medium, so as to reduce power consumption of an electronic device in a sliding operation scenario and improve user experience.

According to a first aspect, an embodiment of this application provides a touchscreen coordinate data reporting method. The method includes: displaying a first interface of a first application; in response to a sliding operation performed on the first interface, obtaining an input event corresponding to the sliding operation; collecting, based on a preset touchscreen sampling rate, each frame of sliding data corresponding to the sliding operation, and performing coordinate calculation on each frame of sliding data to obtain coordinate data corresponding to each frame of sliding data and a first timestamp corresponding to each piece of coordinate data; obtaining a data transmission signal, where the data transmission signal corresponds to a second timestamp, and the data transmission signal is a signal that is delivered by the first application based on the input event and that is used to indicate reporting of the coordinate data to the first application; and sending coordinate data corresponding to a first timestamp that matches the second timestamp to the first application, so that the first application updates the first interface.

It may be understood that the preset touchscreen sampling rate is greater than a refresh rate of the first application. Therefore, in a sliding scenario, sliding data collected by the touchscreen is greater than data required for updating the interface of the first application. Consequently, when extra sliding data is not processed, the first application further needs to perform resampling processing on the extra data, which consumes performance of the electronic device and additionally increases power consumption of the electronic device.

For example, the preset touchscreen sampling rate is 120 Hz, and the refresh rate of the first application is 60 Hz.

It may be understood that the input event includes a DOWN event, an UP event, and a non-DOWN/UP event (corresponding to a MOVE event mentioned previously).

For example, the data transmission signal corresponds to a tpVSync signal in the following embodiments.

Therefore, in a sliding scenario, filtering is performed on a plurality of pieces of coordinate data collected by a touchscreen based on a timestamp of a data transmission signal sent by a target application, and coordinate data obtained through filtering is sent to the target application, thereby reducing a step of resampling the plurality of pieces of coordinate data by the target application, improving performance of the electronic device, reducing power consumption of the electronic device, and improving user experience.

According to a first aspect, the method further includes that when the input event is an UP event, the first application stops sending the data transmission signal.

For example, when the input event is an UP event, it indicates that a current sliding scenario ends, and the first application no longer needs to obtain coordinate data and therefore stops sending the data transmission signal to a daemon.

According to the first aspect or any implementation of the foregoing first aspect, the method further includes that when the input event is a DOWN event, before the data transmission signal is obtained, a plurality of pieces of coordinate data are sent to the first application.

For example, when the input event is a DOWN event, it indicates that the current sliding scenario is started. In this case, a first frame of picture is drawn. To balance response timeliness of the first frame of picture, the daemon actively reports a plurality of frames of coordinate data to the first application before receiving the first data transmission signal.

According to the first aspect or any implementation of the foregoing first aspect, the sending coordinate data corresponding to a first timestamp that matches the second timestamp to the first application includes: comparing the second timestamp with a current system time; and when a comparison result is less than or equal to a preset timeout threshold, determining that reception of the data transmission signal has not timed out, matching the second timestamp against the first timestamp of each piece of coordinate data, and sending coordinate data corresponding to a successfully matched first timestamp to the first application.

For example, generally, the daemon receives the signal within 2 to 3 milliseconds. If the data transmission signal is not received after the time period, it indicates that the data transmission signal has timed out. Otherwise, the data transmission signal has not timed out.

It may be understood that when the data transmission signal has not timed out, a timestamp of the data transmission signal may be aligned with a timestamp of the coordinate data. Therefore, coordinate data that is the same as the timestamp of the data transmission signal may be directly sent to the first application.

According to the first aspect or any implementation of the foregoing first aspect, the method further includes: when the comparison result is greater than the preset timeout threshold, determining that reception of the data transmission signal has timed out, and sending, to the first application, coordinate data corresponding to a first timestamp that has a smallest difference from the second timestamp.

It may be understood that when the data transmission signal has not timed out, because the timestamp of the data transmission signal cannot be aligned with the timestamp of the coordinate data in this case, coordinate data that has a minimum time interval from the timestamp of the data transmission signal needs to be sent to the first application.

According to the first aspect or any implementation of the foregoing first aspect, before the obtaining a data transmission signal, the method further includes: obtaining a package name of the first application, and determining whether the first application is a game application based on the package name; and when the first application is not a game application, performing the step of sending coordinate data corresponding to a first timestamp that matches the second timestamp to the first application.

According to the first aspect or any implementation of the foregoing first aspect, the method further includes: when the first application is a game application, sending each piece of coordinate data to the first application.

It may be understood that in a game scenario of some real-time battle games, a user wants to sacrifice power consumption of the device to obtain better touch responsiveness. Therefore, when this type of application runs, a data transmission signal is not sent to the daemon, so that the first application obtains more coordinate data.

According to the first aspect or any implementation of the foregoing first aspect, the obtaining a data transmission signal includes: obtaining the data transmission signal when a vertical synchronization signal request is received, where the vertical synchronization signal request is a request generated by the first application after receiving the input event.

It may be understood that after receiving the input event, the first application sends a vertical synchronization signal request to an SF thread, and sends the data transmission signal to the SF thread, so that the SF thread forwards the data transmission signal in a cross-thread communication manner.

For example, the foregoing cross-thread communication manner includes a file writing node manner, a Soket manner, and the like.

For example, after the first application sends the vertical synchronization signal request to the SF thread, the SF thread generates a VSync_APP signal and returns the VSync_APP signal to the first application.

According to the first aspect or any implementation of the foregoing first aspect, the preset screen sampling rate is greater than the refresh rate of the first application.

According to the first aspect or any implementation of the foregoing first aspect, when the first application enters an idle state, the first application stops sending the data transmission signal.

According to a second aspect, an embodiment of this application provides an electronic device. The electronic device includes a memory and a processor, and the memory is coupled to the processor. The memory stores program instructions, and when the program instructions are executed by the processor, the electronic device is enabled to perform the instructions of the method in any one of the first aspect or the possible implementations of the first aspect.

According to a third aspect, an embodiment of this application provides a computer-readable medium, configured to store a computer program, where the computer program includes instructions for performing the method in any one of the first aspect or the possible implementations of the first aspect.

According to a fourth aspect, an embodiment of this application provides a computer program, where the computer program includes instructions for performing the method in any one of the first aspect or the possible implementations of the first aspect.

According to a fifth aspect, an embodiment of this application provides a chip, where the chip includes a processing circuit and a transceiver pin. The transceiver pin and the processing circuit communicate with each other through an internal connection channel. The processing circuit performs the method in any one of the first aspect or the possible implementations of the first aspect, to control a receive pin to receive a signal, and to control a transmit pin to send a signal.

### BRIEF DESCRIPTION OF DRAWINGS

FIG. 1 is a schematic diagram of a hardware structure of an electronic device shown by way of example;
FIG. 2 is a schematic diagram of a software structure of an electronic device shown by way of example;
FIG. 3A(1), FIG. 3A(2), and FIG. 3B are schematic diagrams of a game scenario shown by way of example;
FIG. 4A(1), FIG. 4A(2), and FIG. 4B are schematic diagrams of a video live streaming scenario shown by way of example;
FIG. 5 is a schematic diagram of module interaction shown by way of example;
FIG. 6 is a schematic diagram of frame data processing before optimization shown by way of example;
FIG. 7A and FIG. 7B are schematic diagrams of a first interface of a power consumption optimization application of an electronic device shown by way of example;
FIG. 8A(1), FIG. 8A(2), and FIG. 8B are schematic diagrams of a second interface of a power consumption optimization application of an electronic device shown by way of example;
FIG. 9 is a schematic diagram of module interaction shown by way of example;
FIG. 10 is a schematic flowchart of a touchscreen coordinate data reporting method shown by way of example; and
FIG. 11 is a schematic diagram of frame data processing after optimization shown by way of example.

### DESCRIPTION OF EMBODIMENTS

The following clearly and completely describes the technical solutions in embodiments of this application with reference to the accompanying drawings in embodiments of this application. It is clear that the described embodiments are some rather than all of embodiments of this application. Based on embodiments of this application, all other embodiments obtained by a person of ordinary skill in the art without creative efforts fall within the protection scope of this application.

The term "and/or" in this specification is merely an association relationship of associated objects, and indicates that three relationships may exist. For example, A and/or B may indicate the following three cases: Only A exists, both A and B exist, and only B exists.

The terms "first" and "second" in the specification and claims of embodiments of this application are used to distinguish between different objects, but are not used to describe a specific sequence of objects. For example, a first target object and a second target object are used to distinguish between different target objects, but are not used to describe a specific sequence of the target objects.

In embodiments of this application, words such as "example" or "for example" are used to represent giving examples, illustrations, or descriptions. Any embodiment or design solution described as an "example" or "for example" in the embodiments of this application should not be explained as being more preferred or having more advantages than another embodiment or design solution. Exactly, use of the words such as "example" or "for example" is intended to present a related concept in a specific manner.

In the descriptions of the embodiments of this application, unless otherwise stated, "a plurality of" means two or more. For example, a plurality of processing units refer to two or more processing units, and a plurality of systems refer to two or more systems.

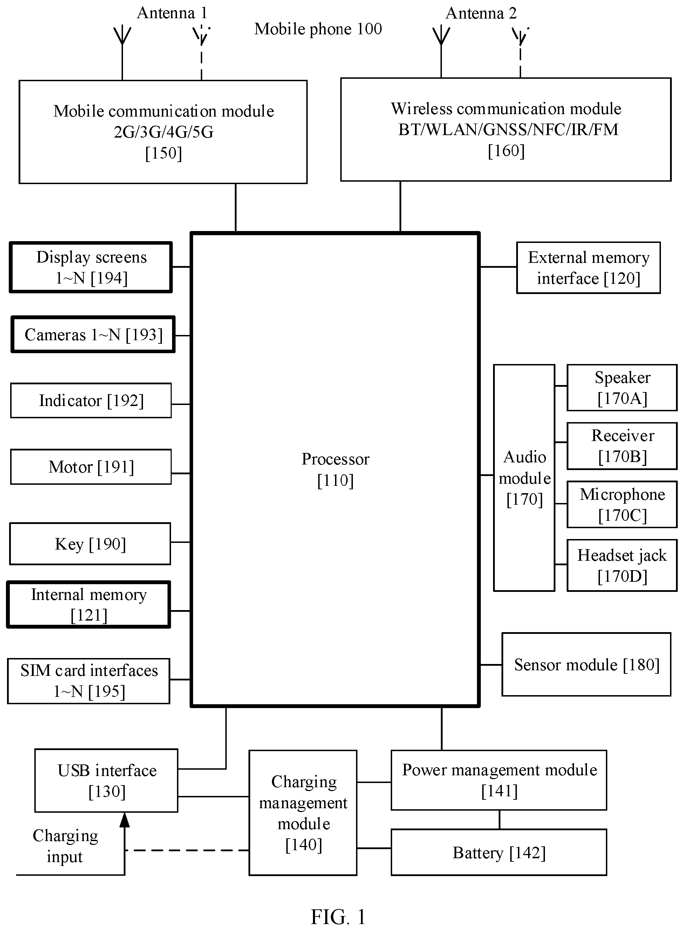

For a better understanding of the technical solutions provided in the embodiments of this application, before the technical solutions in the embodiments of this application are described, a hardware structure of a mobile phone (such as a mobile phone, a tablet computer, or a touchable PC) to which the embodiments of this application are applicable is first described with reference to the accompanying drawings. For ease of description, in FIG. 1, a mobile phone is used as an example for description.

Referring to FIG. 1, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a key 190, a motor 191, an indicator 192, a camera 193, a display screen 194, a subscriber identification module (subscriber identification module, SIM) card interface 195, and the like.

For example, in some implementations, the sensor module 180 may include a pressure sensor, a gyroscope sensor, a barometric pressure sensor, a magnetic sensor, an acceleration transducer, a distance sensor, an optical proximity sensor, a fingerprint sensor, a temperature sensor, a touch sensor, an ambient light sensor, a bone conduction sensor, and the like. Examples are not listed one by one herein. This is not limited in this application.

Specifically, in the technical solution provided in this embodiment of this application, the sensor module 180 may include a pressure sensor and a touch sensor. In this way, in a process of using the mobile phone, when a user performs an operation on the display screen 194, such as a tap, a double tap, sliding, and continuous touch sliding, an operation that is currently performed, a position at which the operation is performed, and reporting information of the position may be accurately determined based on the pressure sensor and the touch sensor.

To better understand the working principles of the foregoing sensors, the following provides a detailed description.

The pressure sensor is configured to sense a pressure signal, and may convert the pressure signal into an electrical signal. In some implementations, the pressure sensor may be disposed on the display screen 194. There are many types of pressure sensors, such as a resistive pressure sensor, an inductive pressure sensor, and a capacitive pressure sensor. The capacitive pressure sensor may include at least two parallel plates having a conductive material. When force is exerted on the pressure sensor, capacitance between electrodes changes. The mobile phone 100 determines intensity of a pressure based on a change of the capacitance. When a touch operation is performed on the display screen 194, the mobile phone 100 detects intensity of the touch operation by using the pressure sensor. The mobile phone 100 may also calculate a touch location based on a detected signal of the pressure sensor. In some implementations, touch operations that are performed at a same touch position but have different touch operation intensity may correspond to different operation instructions. For example, when a touch operation whose touch operation intensity is less than a first pressure threshold is performed on a "Messages" application icon, an instruction for viewing an SMS message is executed. When a touch operation whose touch operation strength is greater than or equal to the first pressure threshold is performed on the "Messages" application icon, an instruction for creating a new SMS message is executed.

The touch sensor is also referred to as a "touch panel". The touch sensor may be disposed on the display screen 194. The touch sensor and the display screen 194 form a touchscreen, which is also referred to as a "touch control screen". The touch sensor is configured to detect a touch operation performed on or near the touch sensor. The touch sensor may transfer the detected touch operation to an application processor, to determine a touch event type, which, for example, may include sliding, tap, long press, or the like. A visual output related to the touch operation may be provided by using the display screen 194. In some other implementations, the touch sensor may alternatively be disposed on a surface of the mobile phone 100, and is at a location different from that of the display screen 194. Specifically, in the technical solution provided in this embodiment of this application, when the user touches or taps the touchscreen, the touch sensor detects an operation behavior of the user. When receiving data collected by the touch sensor in the touchscreen, the mobile phone 100, in response to the operation behavior, for example, determines a sliding operation of the user on the screen in the technical solution provided in this embodiment of this application.

To better understand the technical solutions provided in the embodiments of this application, a continuous touch sliding operation is used as an example to specifically describe a data processing procedure in the operation process. For specific details of the method for reporting touchscreen sampling data generated by the continuous touch sliding operation, refer to the following description, and details are not described herein again.

It should be noted that the so-called continuous touch sliding refers to a behavior in which in an application, a user moves on a display screen by using a finger or a stylus, so that content displayed on a current interface changes.

In addition, it should be noted that the processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices or may be integrated into one or more processors.

In addition, it should be further noted that a memory may be further disposed in the processor 110, to store instructions and data. In some implementations, the memory in the processor 110 is a cache. The memory may store an instruction or data that is just used or cyclically used by the processor 110. If the processor 110 needs to reuse the instruction or the data, the processor 110 may directly invoke the instruction or the data from the memory. This avoids repeated access and shortens a waiting time of the processor 110, thereby improving system efficiency.

Still referring to FIG. 1, for example, the charging management module 140 is configured to receive a charging input from a charger. The power management module 141 is configured to be connected to the battery 142, the charging management module 140, and the processor 110. The power management module 141 receives an input from the battery 142 and/or the charging management module 140, and supplies power to the processor 110, the internal memory 121, the external memory, the display screen 194, the camera 193, the wireless communication module 160, and the like. The power management module 141 may be further configured to monitor parameters such as a battery capacity, a battery cycle count, and a battery health status (leakage or impedance).

Still referring to FIG. 1, for example, a wireless communication function of the mobile phone 100 may be implemented through the antenna 1, the antenna 2, the mobile communication module 150, the wireless communication module 160, the modem processor, the baseband processor, and the like. It should be noted that the antenna 1 and the antenna 2 are configured to transmit and receive electromagnetic wave signals.

Still referring to FIG. 1, for example, the mobile communication module 150 may provide a solution for wireless communication that is applied to the mobile phone 100 and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some implementations, at least some functional modules of the mobile communication module 150 may be disposed in the processor 110. In some implementations, at least some functional modules of the mobile communication module 150 may be disposed in a same device as at least some modules of the processor 110.

In addition, it should be noted that the modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal by using an audio device (not limited to the speaker 170A, the receiver 170B, and the like), or displays an image or a video by using the display screen 194. In some implementations, the modem processor may be an independent device. In some other implementations, the modem processor may be independent of the processor 110, and is disposed in a same device as the mobile communication module 150 or another functional module.

Still referring to FIG. 1, for example, the wireless communication module 160 may provide a solution for wireless communication that is applied to the mobile phone 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the to-be-sent signal into an electromagnetic wave for radiation.

In addition, it should be further noted that the mobile phone 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

Still referring to FIG. 1, for example, the display screen 194 is configured to display an image, a video, and the like. The display screen 194 includes a display panel. In some implementations, the mobile phone 100 may include one or N display screens 194, where N is a positive integer greater than 1.

In addition, it should be further noted that the mobile phone 100 may implement a photographing function by using the ISP, the camera 193, the video codec, the GPU, the display screen 194, the application processor, and the like.

Still referring to FIG. 1, for example, the external memory interface 120 may be configured to be connected to an external memory card, for example, a Micro SD card, to expand a storage capability of the mobile phone 100. The external memory card communicates with the processor 110 through the external memory interface 120, to implement a data storage function. For example, files such as music and videos are stored in the external memory card.

Still referring to FIG. 1, for example, the internal memory 121 may be configured to store computer-executable program code, and the executable program code includes instructions. The processor 110 runs the instructions stored in the internal memory 121, to perform various function applications and data processing of the mobile phone 100. The internal memory 121 may include a program storage area and a data storage area. The program storage area may store an operating system, an application required by at least one function (for example, a sound playback function or an image playback function), and the like. The data storage area may store data (for example, audio data or a phone book) and the like created during use of the mobile phone 100. In addition, the internal memory 121 may include a high-speed random access memory, and may further include a nonvolatile memory, for example, at least one magnetic disk storage device, a flash memory device, or a universal flash storage (universal flash storage, UFS). The processor 110 performs various function applications of the mobile phone and the touchscreen coordinate data reporting method provided in this application by running the instructions stored in the internal memory 121 and/or instructions stored in the memory disposed in the processor 110.

In addition, it should be further noted that the mobile phone 100 may implement an audio function by using the audio module 170, the speaker 170A, the receiver 170B, the microphone 170C, the headset jack 170D, the application processor, and the like. For example, music playback or audio recording is implemented.

Still referring to FIG. 1, for example, the key 190 includes a power-on key, a volume key, and the like. The key 190 may be a mechanical key, or may be a touch key. The mobile phone 100 may receive a key input, and generate a key signal input related to user settings and function control of the mobile phone 100. The motor 191 may generate a vibration prompt. The indicator 192 may be an indicator light, may be configured to indicate a charging status or a power change, and may be further configured to indicate a message, a missed incoming call, a notification, and the like.

Introduction to the hardware structure of the mobile phone 100 ends here. It should be understood that the mobile phone 100 shown in FIG. 1 is merely an example. During a specific implementation, the mobile phone 100 may have more or fewer components than those shown in the figure, may combine two or more components, or may have a different component configuration. The various components shown in FIG. 1 may be implemented in hardware that includes one or more signal processing and/or application-specific integrated circuits, software, or a combination of hardware and software.

To better understand a software structure of the mobile phone 100 shown in FIG. 1, the following describes the software structure of the mobile phone 100. Before the software structure of the mobile phone 100 is described, an architecture that may be used by the software system of the mobile phone 100 is first described.

Specifically, in actual application, the software system of the mobile phone 100 may use a layered architecture, an event-driven architecture, a microkernel architecture, a microservice architecture, or a cloud architecture.

In addition, it may be understood that a software system currently used by a mainstream terminal device includes but is not limited to a Windows system, an Android system, and an iOS system. For ease of description, in the embodiments of this application, the Android system of the layered architecture is used as an example to describe the software structure of the mobile phone 100.

In addition, subsequently, the touchscreen coordinate data reporting solution provided in embodiments of this application is also applicable to another system during specific implementation.

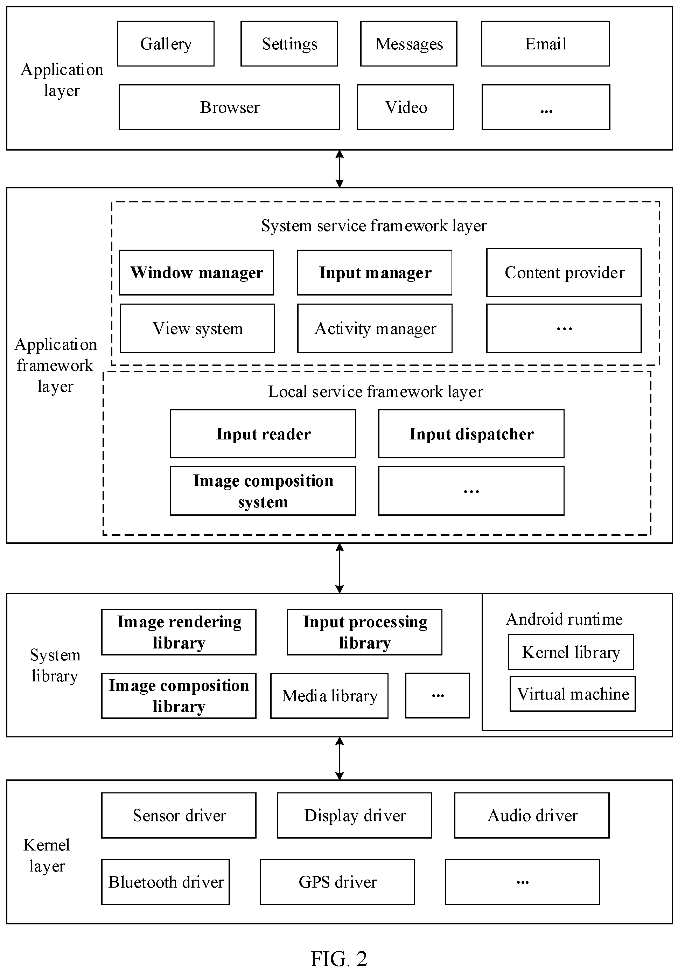

FIG. 2 is a block diagram of a software structure of a mobile phone 100 according to an embodiment of this application.

As shown in FIG. 2, in the layered architecture of the mobile phone 100, software is divided into several layers, and each layer has a clear role and task. The layers communicate with each other through software interfaces. In some implementations, an Android system is divided into four layers: an application layer, an application framework layer, an Android runtime (Android runtime) and system library, and a kernel layer from top to bottom.

The application layer may include a series of application packages. As shown in FIG. 2, the application package may include applications such as Gallery, Settings, Messages, Email, Browser, and Video, which are not listed one by one herein. This is not limited in this application.

The application framework layer provides an application programming interface (application programming interface, API) and a programming framework for the applications at the application layer. In some implementations, these programming interfaces and programming frameworks may be described as functions/services/frameworks, or the like.

In addition, it should be noted that the application framework layer may be divided into a system service framework layer (generally referred to as a Framework layer, which is implemented based on a Java language) and a local service framework layer (generally referred to as a native layer, which is implemented based on a C or C + + language) based on an implementation language of the programming interface and the programming framework that are managed by the application framework layer.

Still referring to FIG. 2, for example, the Framework layer may include a window manager, an input manager, a content provider, a view system, and an activity manager, which are not listed one by one herein. This is not limited in this application.

The window manager is configured to manage a window program. The window manager may obtain a size of the display screen, determine whether a status bar exists, lock a screen, and the like. Specifically, in the technical solution provided in this application, the window manager is further configured to determine a focus window, so as to obtain information such as a focus window layer and a corresponding application package name.

The input manager (InputManagerService) is configured to manage programs input to the device. For example, the input manager can determine input operations such as a mouse click operation, a keyboard input operation, and continuous touch sliding. Specifically, in the technical solution provided in this application, the input manager is mainly configured to determine the continuous touch sliding operation.

The content provider is configured to store and obtain data, and enable the data to be accessible to an application. The data may include a video, an image, audio, calls that are made and answered, a browsing history and bookmarks, a phone book, and the like, which are not listed one by one herein. This is not limited in this application.

The view system includes visual controls such as a text display control and a picture display control. The view system may be configured to build an application. A display interface may include one or more views. For example, a display interface including an SMS message notification icon may include a text display view and a picture display view.

The activity manager is configured to manage a lifecycle of each application and a navigation rollback function, and is responsible for creating a main thread of Android, and maintaining the lifecycle of each application.

Still referring to FIG. 2, for example, the native layer may include an input reader, an input dispatcher, an image composition system, and the like, which are not listed one by one herein. This is not limited in this application.

It should be noted that in a process of using the electronic device, the display screen invokes an event listening port/function (EventHub) every several milliseconds according to a specified period. If an operation performed by the user on the display screen is detected, for example, a continuous touch sliding operation (which may be considered as an event), the event is reported to the input reader (InputReader). That is, the InputReader is configured to read an event from the EventHub, or directly receive an event reported by the EventHub.

In addition, after obtaining the event, the InputReader sends the event to the input dispatcher (InputDispatcher).

After obtaining the event sent by the InputReader, the InputDispatcher distributes the event to a corresponding application (hereinafter referred to as an application) by using the input manager.

The image composition system, that is, surface flinger (hereinafter referred to as an SF thread), is configured to control image composition and generate a vertical synchronization (Vetical Synchronization, VSync) signal.

It may be understood that the SF thread includes a composition thread, a VSync thread, and a buffer thread (for example, quene buffer). The composition thread is configured to be awaken by a VSync signal to perform composition. The VSync thread is configured to generate a next VSync signal based on a VSync signal request. One or more buffer queues exist in the buffer thread, and each buffer queue is separately configured to store cached data of an application corresponding to the buffer thread, such as image data drawn and rendered based on data frames.

The Android runtime (Android Runtime) includes a kernel library and a virtual machine. The Android Runtime is responsible for scheduling and management of the Android system.

The kernel library includes two parts: functional functions that need to be invoked by a java language, and a kernel library of Android.

The system library may include a plurality of functional modules, for example, an image rendering library, an image composition library, an input processing library, and a media library.

The image rendering library is configured to render a two-dimensional or three-dimensional image. The image composition library is configured to composite a two-dimensional or three-dimensional image.

In a possible implementation, the application draws and renders an image by using the image rendering library, and then the application transmits a drawn and rendered image to a buffer queue of the SF thread. Whenever a VSync signal arrives, the SF thread sequentially obtains a frame of to-be-composited image from the buffer queue, and then composites the image by using the image composition library.

The input processing library is configured to process a library capable of processing data input to the device, and can implement processing for an input from a mouse, a keyboard, continuous touch sliding, and the like.

The media library supports playback and recording in a plurality of common audio and video formats, a still image file, and the like. The media library may support a plurality of audio and video encoding formats, for example, MPEG4, H.264, MP3, AAC, AMR, JPG, and PNG.

In addition, it may be understood that the kernel layer in the Android system is a layer between hardware and software. The kernel layer includes at least a sensor driver, a display driver, an audio driver, a Bluetooth driver, a GPS driver, or the like.

Introduction to the software structure of the mobile phone 100 ends here. It may be understood that the layers in the software structure shown in FIG. 2 and components included in each layer do not constitute a specific limitation on the mobile phone 100. In some other embodiments of this application, the mobile phone 100 may include more or fewer layers than those shown in the figure, and each layer may include more or fewer components. This is not limited in this application.

For ease of understanding, example descriptions of some concepts related to the embodiments of this application are provided for reference.
1. Frame: it refers to a single picture that is of the smallest unit and that is displayed on the interface. One frame may be understood as one still picture, and quickly and consecutively displaying a plurality of consecutive frames can create an illusion of object movement.
2. Frame rate: it refers to a quantity of frames for refreshing pictures in 1 second, or may be understood as a quantity of times the graphics processing unit in the electronic device refreshes the picture per second. A higher frame rate allows for a smoother and more realistic animation. The more frames per second, the smoother displayed actions.
   It should be noted that before a frame is displayed on an interface, processes such as drawing, rendering, and composition generally need to be performed.
3. Frame drawing: it refers to picture drawing of a display interface. The display interface may include one or more views. Each view may be drawn by a visual control of a view system. Each view includes sub-views. One sub-view corresponds to one widget in the view. For example, one sub-view corresponds to one symbol of a picture view.
4. Frame rendering: it refers to performing a coloring operation on a drawn view, adding a 3D effect to the drawn layer, or the like. For example, the 3D effect may be a lighting effect, a shadow effect, a texture effect, or the like.
5. Frame composition: it refers to a process of compositing a plurality of one or more rendered views into a display interface.
6. Vertical synchronization (vetical synchronization, VSync) signal: a signal configured to control start of processes such as frame drawing and rendering, composition, and sending for display.

It should be noted that to ensure fluency of display, and avoid a phenomenon such as display stuttering, the electronic device generally performs display based on a VSync signal, so as to synchronize processes such as image drawing, rendering, composition, and screen refresh display.

It may be understood that a VSync signal is a periodic signal, and a period of the VSync signal may be set based on a screen refresh rate. For example, when the screen refresh rate is 60 Hz, the period of the VSync signal may be 16.6 ms. To be specific, the electronic device generates one control signal at an interval of 16.6 ms to periodically trigger the VSync signal. For another example, when the screen refresh rate is 90 Hz, a period of the VSync signal may be 11.1 ms. To be specific, the mobile phone generates one control signal at an interval of 11.1 ms to periodically trigger the VSync signal.

In addition, it should be further noted that the VSync signal includes software VSync (VSync-APP or VSync-SF) and hardware VSync (VSync-HW). The VSync-APP is configured to trigger a drawing and rendering procedure. The VSync-SF is configured to trigger a composition procedure. The hardware VSync signal (VSync-HW) is configured to trigger a screen display refreshing procedure. Generally, the software VSync and the hardware VSync are kept synchronous in period. A change of 60 Hz and 120 Hz is used as an example. If the VSync-HW is switched from 60 Hz to 120 Hz, the VSync-APP and the VSync-SF synchronously change and are switched from 60 Hz to 120 Hz.
7. Touch sampling rate: it refers to a speed at which the screen collects signals from finger touches. For example, when the sampling rate is 240 Hz, it means that the screen collects signal samples 240 times per second.
8. Touch reporting rate: it refers to a quantity of times that the touch panel of the screen scans per second, and then noise, false report points, and jumping points are removed by using a touch chip algorithm, so as to obtain a remaining touch sampling signal.

It may be understood that a difference between the touch sampling rate and the touch reporting rate is that the touch sampling rate focuses on the speed at which the screen collects signals from finger touches, and the touch reporting rate focuses on how to remove noise and false report points by using an algorithm when processing these signals, so as to improve touch accuracy and sensitivity. Therefore, although both the touch sampling rate and the touch reporting rate affect touch performance of the screen, action mechanisms and optimization objectives of the touch sampling rate and the touch reporting rate are different.

In addition, it should be further noted that a higher touch sampling rate is not always better, because a higher sampling rate leads to higher power consumption and a higher requirement for the network. However, optimization of the touch reporting rate helps improve touch sensitivity of the screen, and reduces a risk of interruption of a false report point caused by noise interference.

The following describes examples of workflows of software and hardware of the mobile phone 100 with reference to an application starting scenario or a scenario in which interface switching occurs in an application.

For example, when the touch sensor in the touch panel receives a touch operation, the kernel layer processes the touch operation into an original input event (including information such as touch coordinates, touch pressure, and a timestamp of the touch operation), and the EventHub detects the original input event and stores the original input event in the kernel layer. The InputReader reads the original input event from the kernel layer by using the input processing library, hands the original input event over to the InputDispatcher, and the InputDispatcher performs packaging processing on the original input event, for example, encapsulates the original input event as a set data format, determines an application corresponding to the original input event, and further reports the original input event to the input manager. The input manager parses information of the original input event (including an operation type, a reporting position, and the like), determines a focus application based on a current focus, that is, the application corresponding to the original input event, and sends information obtained through parsing to the focus application.

It may be understood that the focus may be a finger touch point in the touch operation or a click position in a stylus or mouse click operation. The focus application is an application running in a foreground of the electronic device or an application corresponding to a touch position in the touch operation. The focus application determines, based on the information of the original input event obtained through parsing (for example, the reporting position), a control corresponding to the original input event.

For example, the touch operation is a continuous sliding operation, and a control corresponding to the continuous touch sliding operation is a list control of a third-party application. The focus application invokes the image rendering library in the system library to draw and render an image by using the view system. The focus application sends the drawn and rendered image to the buffer queue of the SF thread. The drawn and rendered image is composited into a focus application interface by using the image composition library in the system library. The SF thread enables the display screen to display a corresponding interface of the focus application by using the display driver of the kernel layer.

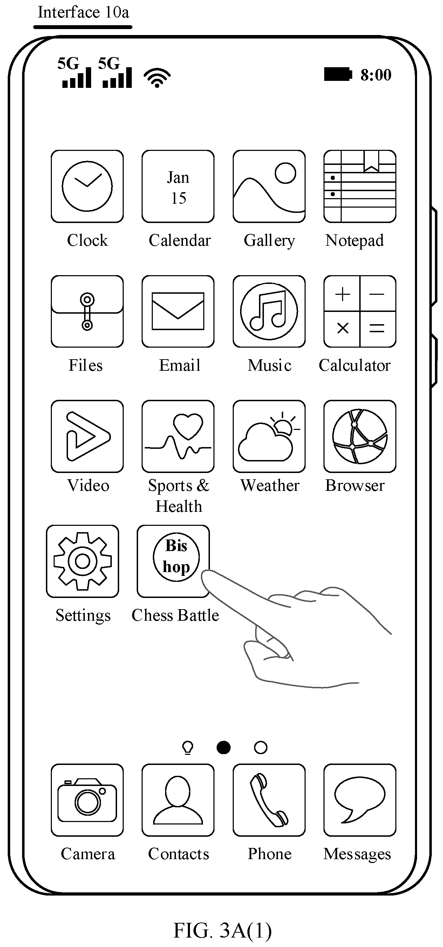

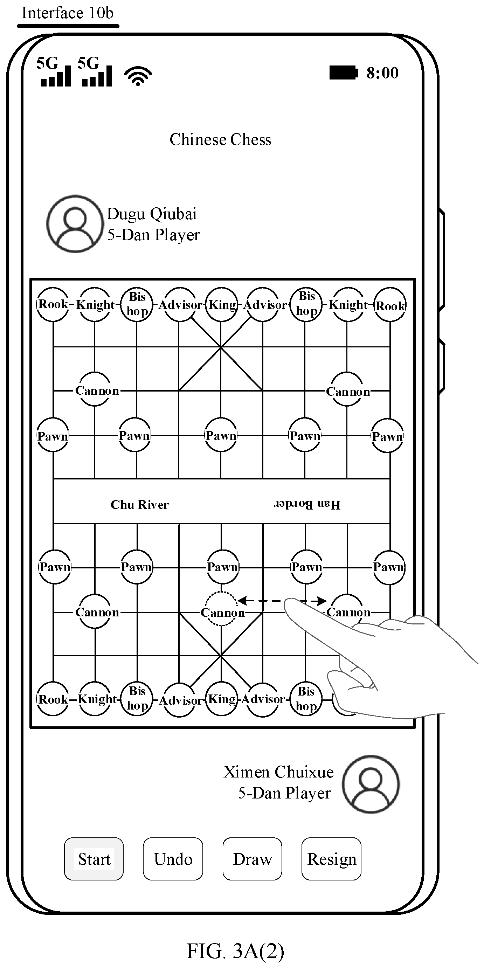

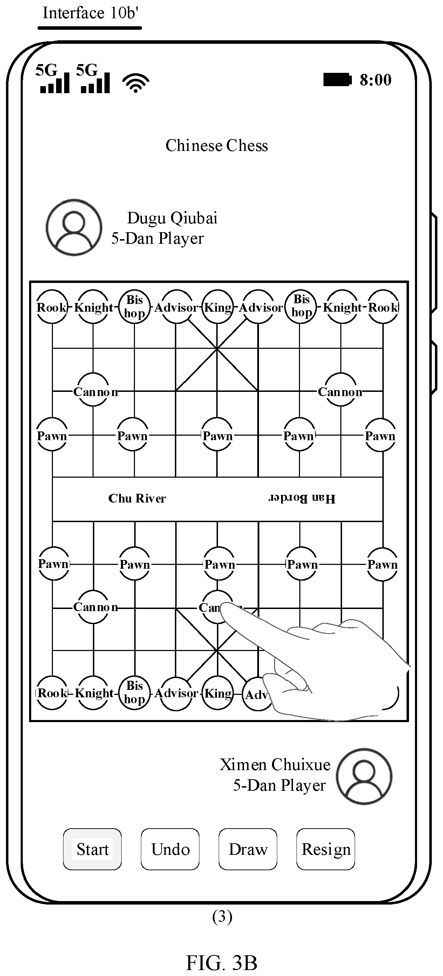

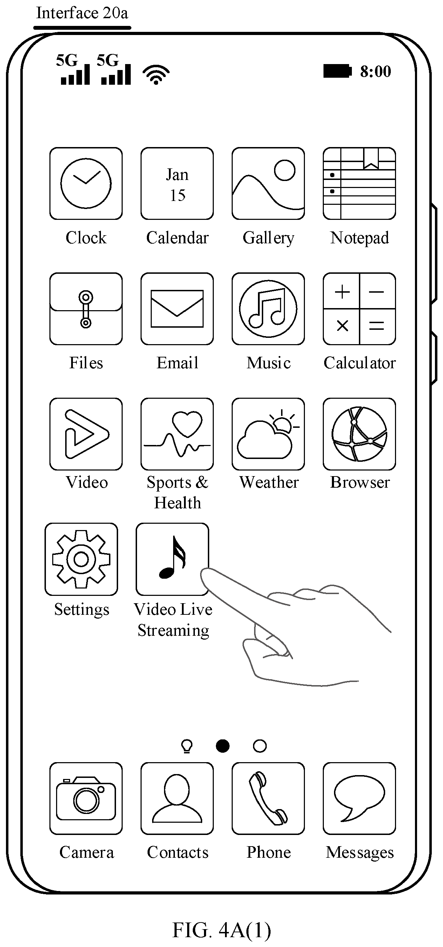

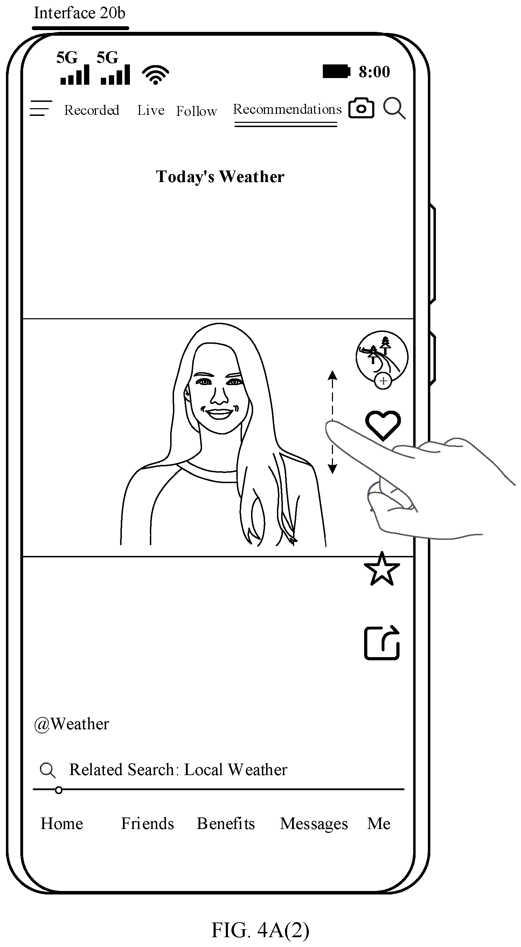

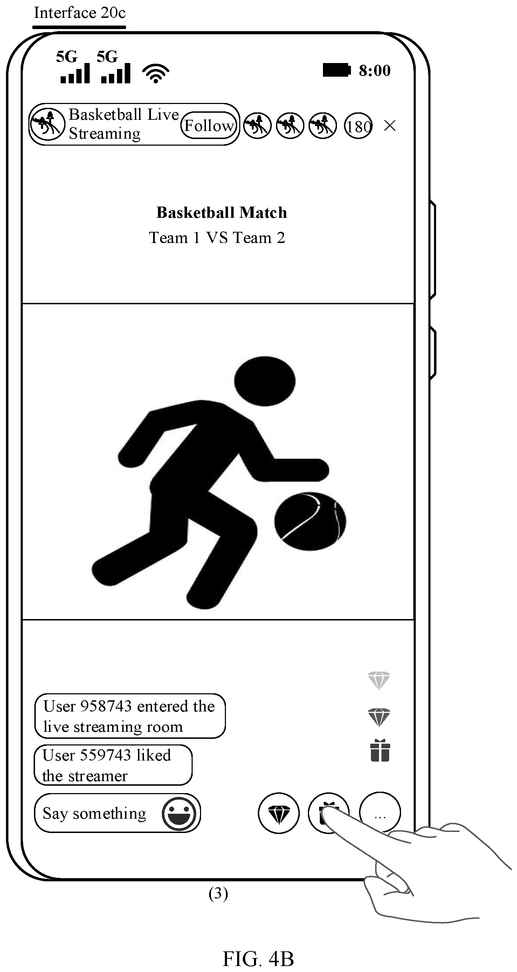

The following describes, with reference to the accompanying drawings, an application scenario to which the technical solutions of this application are applicable. For example, FIG. 3A(1), FIG. 3A(2), FIG. 3B, FIG. 4A(1), FIG. 4A(2), and FIG.4B are schematic diagrams of interfaces of an electronic device in different applications in a possible implementation.

For example, as shown in an interface 10a in FIG. 3A(1), the user enters a chess game by tapping a "Chess Battle" icon in the interface 10a, and a game interface as shown in an interface 10b in FIG. 3A(2) is displayed.

In the game interface 10b, the user needs to slide a chess piece in the interface to play against an opponent. For example, the user taps a chess piece "Cannon" in the interface 10b and continuously slides the chess piece "Cannon" in a direction indicated by an arrow in the interface 10b, so as to slide the chess piece "Cannon" to the middle of a chessboard, as shown in a game interface in an interface 10c in (3) in FIG. 3B.

For example, as shown in an interface 20a in FIG. 4A(1), the user enters a video live streaming software interface by tapping a "Video Live Streaming" picture in the interface 20a, and a video interface described in an interface 20b in FIG. 4A(2) is displayed. In the video interface 20b, the user may slide in a direction indicated by an arrow in the interface 20b, so as to implement switching of content in the video live streaming software interface until switching to content the user likes.

In addition, in the video live streaming software interface, the user may further tap a "Live" button in the interface 20b to enter a live streaming room, as shown in a live streaming interface in an interface 20c in (3) in FIG. 4B. In the live streaming room, the user may continuously send gifts to a streamer by pressing a "Gift" button provided by the software. The sent gifts are displayed in a lower right corner of the interface 20c in a form of bubbles.

It may be understood that in FIG. 3A(1), FIG. 3A(2), FIG. 3B, FIG. 4A(1), FIG. 4A(2), and FIG. 4B, the user interacts with the electronic device through an upward sliding operation, or a downward sliding operation, and by touching and holding the screen. When the electronic device receives an operation performed by the user, the electronic device performs processes such as frame drawing, rendering, and composition based on the operation, and finally sends a composited picture for display, so that content displayed on the display screen changes with movement of the finger of the user on the display screen, that is, content of the current interface is updated with movement of the finger.

It should be understood that before performing frame drawing, the electronic device further needs to perform data collection on a touch operation of the user by using a touchscreen driver, perform coordinate calculation on collected data, and send, through Input processing, the calculated coordinates to the focus application for drawing and display.

However, when the refresh rate of the focus application is lower than the touch reporting rate of the electronic device, the focus application does not require the electronic device to perform collection and calculate all obtained coordinates. For an extra coordinate point, the focus application further needs to perform resampling calculation on the coordinate point, and perform an event response based on coordinates obtained through resampling calculation. In the foregoing process of performing resampling calculation, performance consumption and power consumption of the electronic device are undoubtedly increased, thereby reducing battery usage duration of the electronic device, and even causing continuous heating of the electronic device.

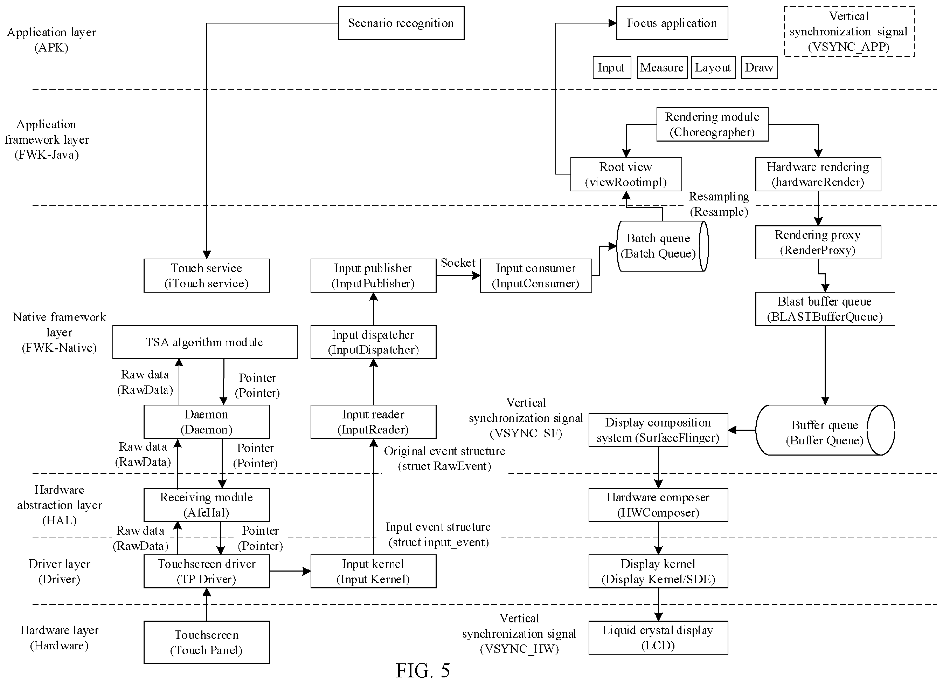

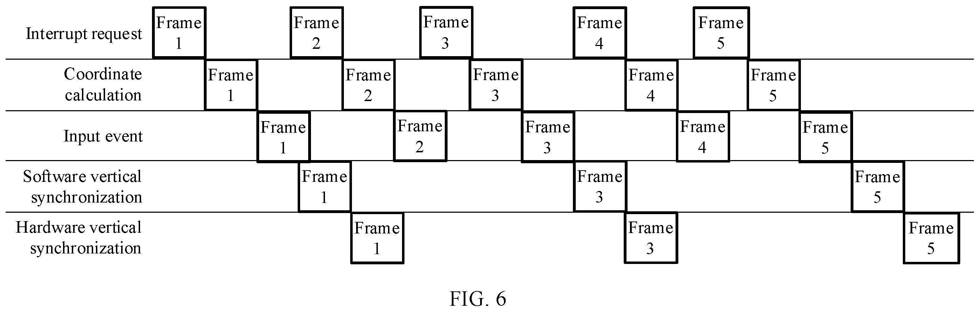

The following describes, with reference to FIG. 5 and FIG. 6, a data processing procedure involved in interface display of the focus application in the electronic device in response to a sliding operation of the user, and a data frame processing procedure in the data processing process.

For example, in a chess scenario shown in the interface 10b in FIG. 3A(2), the scenario is described with reference to the data processing procedure shown in FIG. 5. The focus application (that is, a chess application) sends a VSync signal request to the SF thread. After receiving the VSync signal request, the SF thread sends a VSync_APP signal to the focus application. The user slides on the touchscreen, and the touchscreen driver (TP Driver) performs data collection on the sliding operation of the user based on an interrupt request (Irq-tp) triggered by the electronic device, and sends the collected sliding data to a daemon by using a receiving module (AfeHal). The daemon sends the collected sliding data to a TSA algorithm module for coordinate calculation, and the TSA algorithm module sends the calculated coordinate data to a batch queue (Batch Queue) by sequentially using the daemon, the receiving module, the touchscreen driver, and an Input subsystem. Because the refresh rate of the focus application is lower than the touch reporting rate of the electronic device, the coordinate data is accumulated in the batch queue until the focus application obtains the coordinate data in the batch queue based on the VSync_APP signal. Because a plurality of pieces of coordinate data exist in the batch queue, the focus application further needs to perform re-collection calculation on the plurality of pieces of coordinate data in the batch queue to obtain final coordinate data.

Based on the foregoing premise, referring to FIG. 6, for example, a frame 1 to a frame 5 are sliding data collected by the touchscreen driver based on the interrupt request triggered by the electronic device in a sliding process in which the user slides on the touchscreen. It may be understood that in a same time period, a data amount in the sliding data is controlled by the touch sampling rate of the electronic device, and on the electronic device with a high sampling rate, a data amount of the sliding data per unit time may be more data frames.

Still referring to FIG. 6, for example, the daemon sends the collected sliding data frame 1 to the TSA algorithm module for coordinate calculation, to obtain a coordinate data frame 1. Because each coordinate data report needs to pass through the Input subsystem, the coordinate data frame 1 is sent to the batch queue based on an input event, the focus application performs image drawing based on the coordinate data frame 1, the Choreographer sends the drawn frame 1 image data to the buffer thread of the SF thread, and the buffer thread buffers the frame 1 image data into the buffer queue corresponding to the focus application. Correspondingly, when a corresponding composition time point is reached, the composition thread fetches the frame 1 image data from the buffer queue for composition. After composition is completed, the electronic device may invoke the display driver in the kernel layer to display content corresponding to the frame 1 on the display screen.

Still referring to FIG. 6, for example, the daemon sends the collected sliding data frame 2 to the TSA algorithm module for coordinate calculation, to obtain a coordinate data frame 2. Because each coordinate data report needs to pass through the Input subsystem, the coordinate data frame 2 is sent to the batch queue based on an input event. However, because the refresh rate of the focus application is lower than the sampling rate of the touchscreen, after the coordinate data frame 2 is sent to the batch queue, the focus application does not process the coordinate data frame 2 in a timely manner. In this case, after the sliding data frame 3 is calculated, an obtained coordinate data frame 3 is also sent to the batch queue. In this case, only when the focus application obtains the coordinate data frame in the batch queue, it is found that there are two coordinate data frames (which are respectively the coordinate data frame 2 and the coordinate data frame 3) in the batch queue. Therefore, the focus application further needs to perform resampling calculation (for example, directly discarding the coordinate data frame 2) on the two frames of data, and perform image drawing based on the coordinate data frame (the coordinate data frame 3) obtained through resampling, and finally send the drawn frame 3 image data for display.

It should be noted that in FIG. 6, frame data, such as a frame 1, a frame 2, and a frame 3, that appears in the interrupt request refers to sliding data collected by the touchscreen driver. Frame data, such as a frame 1, a frame 2, and a frame 3, that appears in coordinate calculation refers to coordinate data obtained through calculation by the TSA algorithm module. Frame data, such as a frame 1, a frame 2, and a frame 3, that appears in the input event refers to coordinate data that is sent to the batch queue. Frame data, such as a frame 1, a frame 3, and a frame 5, that appears in software vertical synchronization and hardware vertical synchronization refers to composited image data.

Still referring to FIG. 6, for example, frame 2 data and frame 4 data are sent to the batch queue but are discarded by the focus application through resampling during data usage. This is undoubtedly a waste of performance of the electronic device and increases power consumption of the electronic device.

It should be understood that the foregoing description is merely an example provided to better understand the technical solution of this embodiment, and is not used as a unique limitation on this embodiment.

In conclusion, in an application, in a process in which the user moves on the display screen by using the finger and the stylus (subsequent description uses the finger as an example), because the touch sampling rate of the electronic device is higher than a refresh rate of the application, a large amount of invalid coordinate data is accumulated in the batch queue, so that the application further needs to resample the coordinate data, thereby causing waste of performance of the electronic device and increasing power consumption of the electronic device.

In view of this, this application provides a touchscreen coordinate data reporting method, so as to resolve a problem of performance consumption and increased power consumption of the electronic device caused by resampling of the focus application due to accumulation of invalid coordinate data in the batch queue.

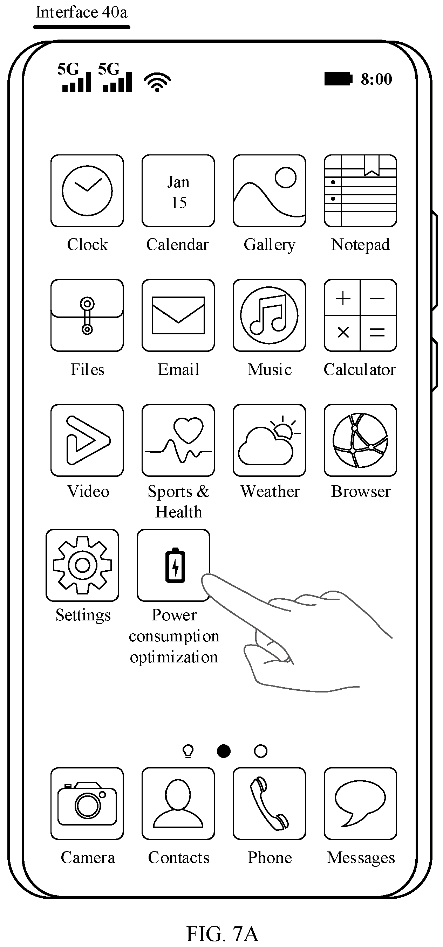

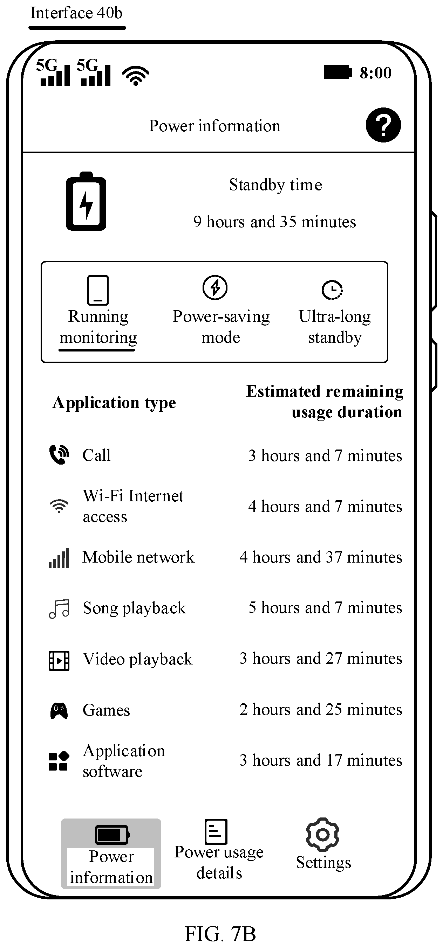

In an implementation, to more clearly display a power consumption reduction effect implemented in this application, remaining duration of various applications on the electronic device may be compared before and after the touchscreen coordinate data reporting method in this application is used on the electronic device. In an implementation, an application used to display estimated remaining usage duration of various applications is further installed on the electronic device, as shown in FIG. 7A and FIG. 7B.

FIG. 7A shows an example mobile phone interface 40a. For example, icons of a plurality of applications, such as an icon of a camera application, and icons of applications such as Contacts, Phone, Messages, Clock, Calendar, Gallery, Notepad, Files, Email, Music, Calculator, Video, Recorder, Weather, Browser, Settings, and Power Consumption Optimization are displayed on the interface.

It should be noted that in an implementation, the interface 40a shown in FIG. 7A may be referred to as a main interface. When the user taps the icon of the power consumption optimization application in the interface 40a, power consumption optimization may be performed on the electronic device by using a function of the power consumption optimization application. For example, power consumption optimization is performed on the continuous touch sliding scenario in the application based on a synchronization optimization interface provided in the touchscreen coordinate data reporting method provided in this application.

Still referring to FIG. 7A, when the user taps the icon of the power consumption optimization application, the mobile phone identifies, in response to an operation of the user, that the icon corresponding to the tapping operation of the user is the icon of the power consumption optimization application, and further invokes a responded interface in the application framework layer to start the power consumption optimization application. In this case, the mobile phone displays an interface of the power consumption optimization application, as shown in the interface 40b in FIG. 7B.

FIG. 7B shows an example power consumption optimization interface 40b. For example, three display switching buttons are displayed on the interface, and are respectively power information, power usage details, and settings. An interface corresponding to the power information switching button is a main interface, and remaining standby duration in current power of the electronic device, a "Running monitoring" tab, a "Power-saving mode" tab, and an "Ultra-long standby" tab are displayed. The "Running monitoring" tab is selected by default, and estimated remaining usage duration of various applications when a corresponding tab is selected is displayed in a list of the interface. For example, when "Running monitoring" is selected, the displayed estimated remaining usage duration of the game application is 2 hours and 25 minutes, and the estimated remaining usage duration of video playback software is 3 hours and 27 minutes.

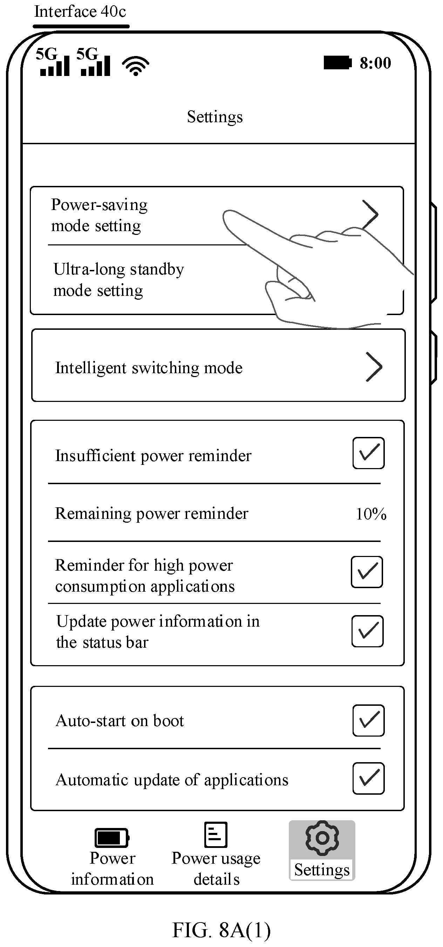

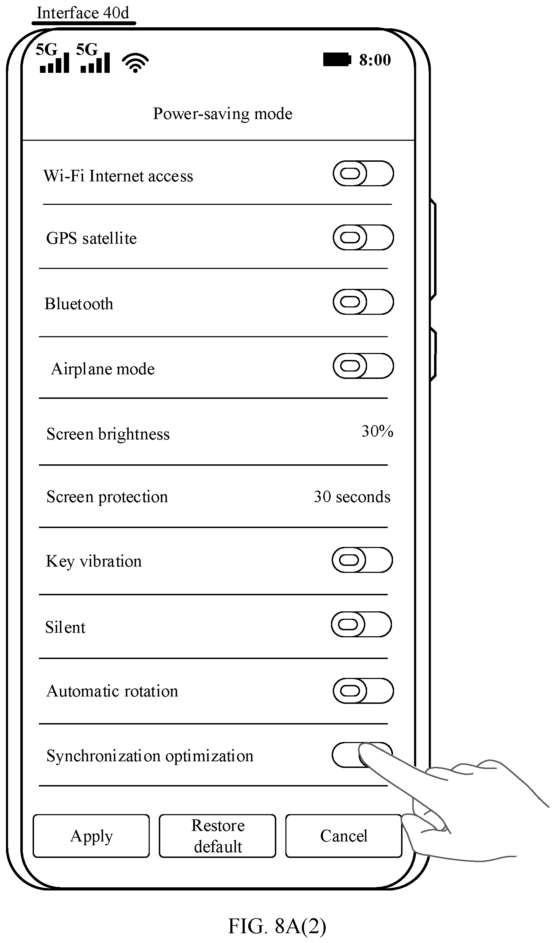

Still referring to FIG. 7B, after the user taps the "Power-saving mode" tab, estimated remaining usage duration of various applications after power optimization is displayed in the list of the interface. To display only an optimization effect based on the solution provided in this application, the "Settings" button may further be tapped to enter a setting interface, as shown in an interface 40c in FIG. 8A(1).

FIG. 8A(1) shows an example setting interface 40c of the power consumption optimization application. For example, the interface includes a plurality of setting options, including power-saving mode setting, ultra-long standby mode setting, intelligent switching mode, insufficient power reminder, and remaining power reminder.

In an implementation, to display only an optimization effect based on the solution provided in this application, the power-saving mode setting may be tapped to enter a power-saving mode setting interface, as shown in an interface 40d in FIG. 8A(2).

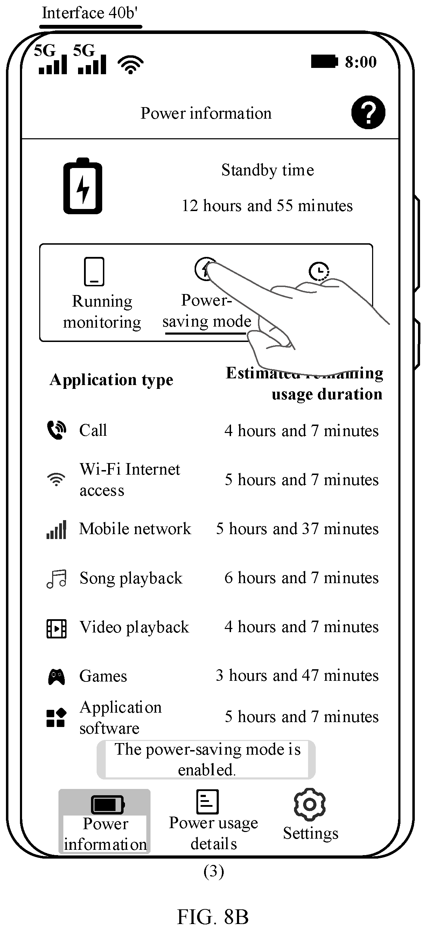

FIG. 8A(2) shows an example power-saving mode setting interface. The interface includes a plurality of optimization options for the power-saving mode, including Wi-Fi Internet access, GPS satellite, Bluetooth, Airplane mode, screen brightness, screen protection, key vibration, silent, automatic rotation, and synchronization optimization. The synchronization optimization is power consumption optimization performed by the user in the continuous touch sliding scenario based on the solution provided in this application. On this interface, the synchronization optimization option is enabled separately to display the effect of the technical solution provided in this application. After the synchronization optimization option is selected, an "Apply" button is tapped, and the electronic device enables synchronization optimization and displays a power information interface 40b as shown in FIG. 7B. After the "Power-saving mode" tab in the interface 40b is tapped, the power consumption optimization application enables power consumption optimization and displays estimated remaining duration of various applications based on the touchscreen coordinate data reporting method provided in this application, as shown in (3) in FIG. 8B. The estimated remaining usage duration of the game application is 3 hours and 47 minutes, and the estimated remaining usage duration of the video playback software is 4 hours and 7 minutes.

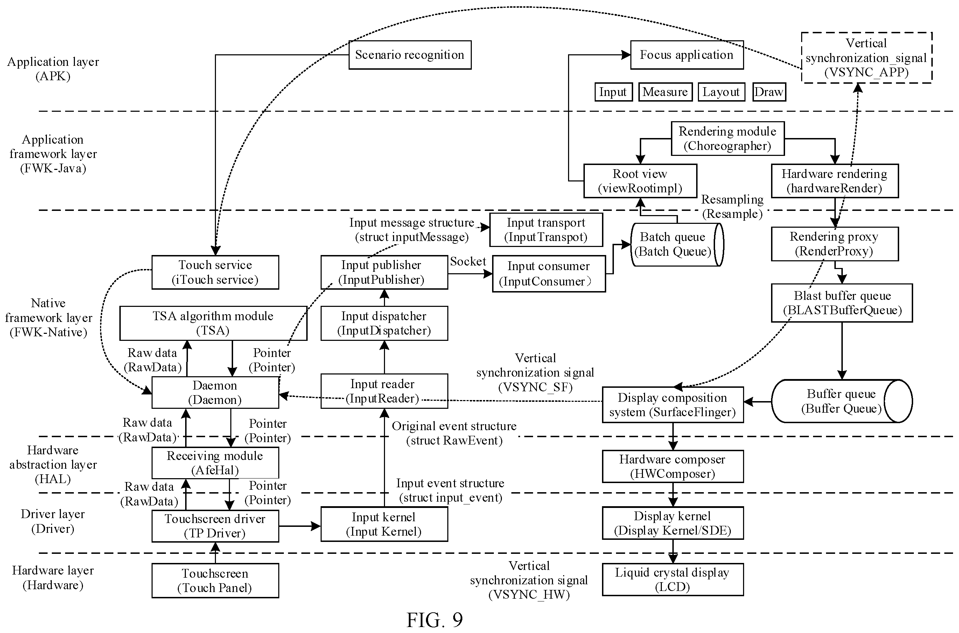

The following describes, with reference to FIG. 4A(1), FIG. 4A(2), FIG. 4B, and FIG. 9, a data processing procedure in which the focus application performs power consumption optimization on the electronic device based on the solution provided in this application in the power-saving mode of the power consumption optimization application.

For example, in the interface 20b shown in FIG. 4A(2), the user slides up and down in an arrow direction to interact with the electronic device, so as to switch displayed content of a video live streaming application.

For example, a procedure of switching an application in the video live streaming application to respond to the sliding operation is described with reference to FIG. 9. The focus application (that is, the video live streaming application) sends a VSync signal request to the SF thread, and the focus application further sends a data transmission (tpVSync) signal to the Daemon. After receiving the VSync signal request, the SF thread separately forwards the data transmission signal to the focus application and the Daemon (a VSync signal sent to the focus application is denoted as a VSync_APP signal, and the data transmission signal sent to the Daemon is denoted as a tpVSync signal). The user slides on the touchscreen, and the touchscreen driver performs data collection on the sliding operation of the user based on the interrupt request Irq-tp triggered by the electronic device, and sends the collected sliding data to the daemon by using the AfeHal. After receiving the tpVSync signal sent by the focus application, the Daemon determines whether the tpVSync signal has timed out. When the tpVSync signal has timed out, the collected sliding data is sent to the TSA algorithm module for coordinate calculation, and the TSA algorithm module sends the calculated coordinate data to the batch queue by sequentially using the daemon, the receiving module, the touchscreen driver, and the Input subsystem.

In another implementation, the daemon Daemon may transparently transmit a resampling method to an input transport module by using an input transport module when it is determined that the tpVSync signal has not timed out, so that the focus application performs resampling on the coordinate data in the batch queue based on the resampling method.

In addition, it should be noted that in this embodiment of this application, the daemon Daemon sends the coordinate data to the batch queue based on the tpVSync signal. When it is determined that the tpVSync signal has not timed out, the data in the batch queue is fetched by the focus application in a timely manner, and the coordinate data in the batch queue does not accumulate. That is, the focus application does not need to perform resampling calculation on the data in the batch queue again, thereby greatly reducing performance consumption of the electronic device and reducing power consumption of the electronic device.

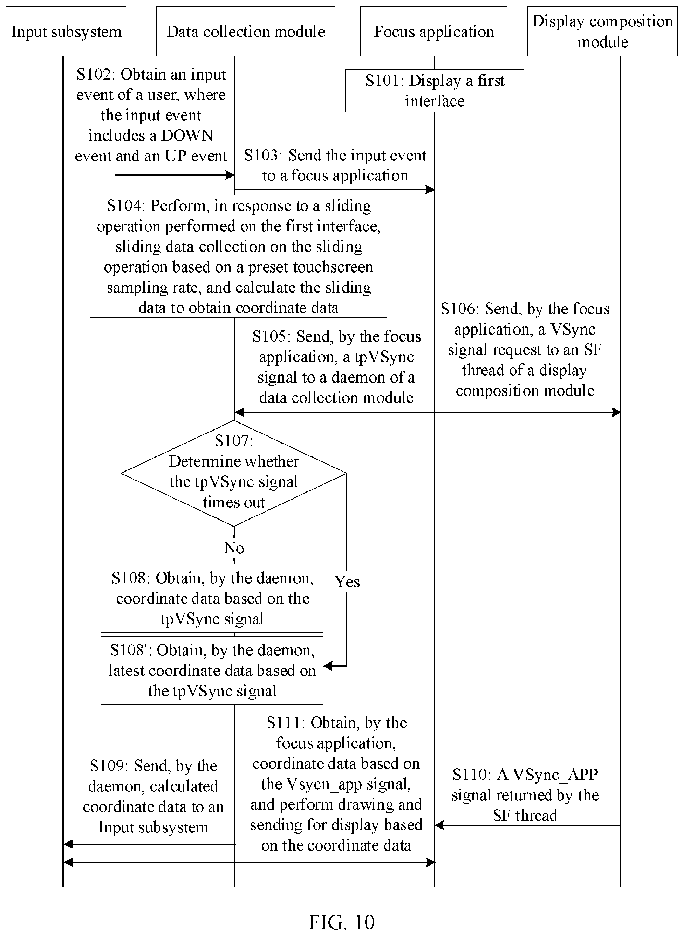

For a data processing process in FIG. 9, FIG. 10 shows a specific interaction procedure of the functional modules. The following provides descriptions with reference to the accompanying drawings.

FIG. 10 is an implementation process of the touchscreen coordinate data reporting method according to the embodiments of this application, and relates to a sequence diagram of interaction between the functional modules.

Referring to FIG. 10, the functional modules in FIG. 9 are exemplarily combined. As shown in FIG. 9, the touchscreen, the touchscreen driver, the receiving module, the daemon, and the TSA algorithm are combined into a data collection module. The input kernel, the input reader, the input dispatcher, the input publisher and an input consumer are combined into the Input subsystem. The focus application, a rendering module, a root view, hardware software, and a rendering proxy are combined into the third-party application. A display composition system, a hardware composer, a display kernel, and a liquid crystal display are combined into a display composition module. FIG. 10 directly uses an example in which the user performs continuous touch sliding (an Input event) in the third-party application, the sensor detects the sliding operation, and the focus application initiates, in response to the continuous touch sliding operation of the user, a request for requesting a VSync signal to the display composition module, to specifically describe interaction between the data collection module, the Input subsystem, and the display composition module in a continuous touch sliding process.

S101: Display a first interface of a first application.

For example, the first application is the focus application currently running in the foreground. The first interface is a currently displayed interface of the first application.

For example, that the first application is a game application is used as an example, the first interface may be the chess interface shown in FIG. 3A(2), and content displayed in the first interface is, for example, a picture shown in FIG. 3A(2). The first application is used as a video playback application. The first interface may be the video playback interface or the live streaming interface shown in FIG. 4A(2) or (3) in FIG. 4B, and content displayed in the first interface is, for example, a picture shown in FIG. 4A(2) or (3) in FIG. 4B.

It may be understood that in a game scenario of some real-time battle games, the user wants to obtain better touch responsiveness. Therefore, in this embodiment, a package name of the first application may be further obtained, whether the first application is a game application is determined based on the package name, and when the first application is a game application, the touchscreen coordinate data reporting method provided in this embodiment of this application is ended. When the first application is a non-game application, the touchscreen coordinate data reporting method provided in this embodiment of this application is continued to be performed.

In addition, this application may further provide a whitelist for recording the game, so that the user may add the game to the whitelist, so that the solution provided in this application is not performed when the game runs.

S102: Obtain an input event of the user, where the input event includes a DOWN event and an UP event.

It should be noted that events supported by a front end of the electronic device include a DOWN event, a MOVE event, and an UP event, and only a DOWN event and an UP event need to be included in a background. Another event may be considered as a MOVE event.

For example, when obtaining the input event of the user, the touchscreen sends the input event to the focus application by using the data collection module and the Input subsystem. After receiving the input event, the focus application sends a VSycn signal request to the SF thread in the display composition module, so as to trigger a picture drawing operation.

S103: Send the input event to the focus application.

S104: Perform, in response to a sliding operation performed on the first interface, sliding data collection on the sliding operation based on a preset touchscreen sampling rate, and calculate the sliding data to obtain a plurality of pieces of coordinate data.

For example, the preset touchscreen sampling rate may be 90 Hz, 240 Hz, or the like. This is not limited in this embodiment of this application.

It may be understood that to obtain better operation experience, generally, the touchscreen sampling rate is greater than the refresh rate of the focus application. In this way, the focus application can obtain more user operation coordinates within a same time.

S105: The focus application sends a tpVSync signal to the daemon of the data collection module.

It may be understood that the tpVSync signal is a data transmission signal delivered by the focus application to the daemon, and a delivery manner of the tpVSync signal may be a cross-thread communication manner. The foregoing cross-thread communication manner includes a file writing node manner, a Soket manner, and the like. Specifically, while sending a VSycn signal request to the SF thread, the focus application further delivers the tpVSync signal to the daemon by using the SF thread.

In an implementation, when the input event is a DOWN event, which represents a first frame of data in a current sliding scenario. To balance response timeliness of the first frame of data, the daemon in the data collection module may further actively report a plurality of frames of coordinate data when receiving the event until the daemon receives the tpVSycn signal.

In an implementation, when the input event is an UP event, it is determined that the current sliding scenario ends, and the focus application stops sending the tpVSycn signal to the daemon.

S106: The focus application sends the VSync signal request to the SF thread of the display composition module.

S107: Determine whether the tpVSync signal has timed out.

For example, generally, if the tpVSync signal is sent and not delivered to the daemon within 2 milliseconds or 3 milliseconds, it may be considered that the tpVSync signal has timed out.

It may be understood that when the tpVSync has timed out, a high sampling rate may lead to that in this period, the touchscreen driver may collect a plurality of pieces of sliding data, and the TSA algorithm module calculates a plurality of pieces of coordinate data. Therefore, whether the tpVSync signal has timed out needs to be further determined.

S108: The daemon obtains coordinate data based on the tpVSync signal.

When the tpVSync signal has not timed out, corresponding coordinate data is obtained from the plurality of pieces of coordinate data based on a timestamp of the tpVSync signal, and the coordinate data is sent to the batch queue of the Input subsystem.

S108': The daemon obtains latest coordinate data based on the tpVSync signal.

When the tpVSync signal has timed out, coordinate data closest to the timestamp is selected from the plurality of pieces of coordinate data based on the timestamp of the tpVSync signal, and is sent to the batch queue of the Input subsystem.

S109: The daemon sends calculated coordinate data to the Input subsystem.

S110: A VSync_APP signal returned by the SF thread.

S111: The focus application obtains coordinate data based on the Vsycn_app signal, and performs drawing and sending for display based on the coordinate data.

In addition, in an implementation, the focus application enters an idle state. In this state, the focus application no longer needs to perform picture update. In this case, the focus application stops sending the tpVSync signal to the daemon.

Therefore, in the touchscreen coordinate data reporting method provided in this embodiment, after the focus application triggers drawing and rendering, a data transmission signal is sent to the daemon, so that the daemon reduces a frequency of sending coordinate data and a frequency of triggering the Input event, thereby reducing a resampling operation performed by the focus application on batch queue, improving performance of the electronic device, reducing power consumption of the electronic device, effectively reducing occurrence of a "hot to the touch" scenario of the electronic device, and further improving user experience.

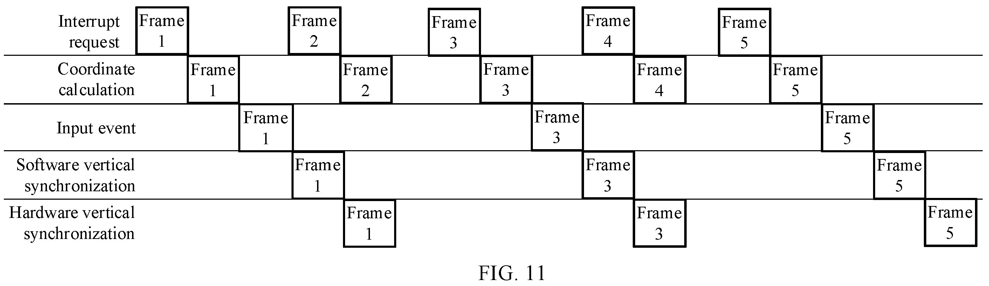

To describe the data processing process of the solution provided in the embodiments of this application more clearly, the following describes a data frame processing procedure in the data processing process of this application with reference to FIG. 11.

For example, with reference to the chess scenario shown in the interface 10b in FIG. 3A(2), in this scenario, the sampling rate of the touchscreen is 120 Hz, and a refresh rate of a chess battle application is 60 Hz. In a process in which the user presses and slides on the touchscreen, the chess battle application sends a VSync signal request to the SF thread, and sends a tpVSync signal to the daemon by using the SF thread, and the SF thread returns a VSync_APP signal to the chess battle application. In this period, the touchscreen driver performs data collection on the sliding operation of the user based on a system-triggered interrupt request, and sends the collected data to the TSA algorithm module for coordinate calculation by using the daemon. After receiving the tpVSync signal, the daemon sends coordinate data corresponding to the tpVSync signal to the Input subsystem to trigger an input event, and the chess battle application obtains the coordinate data based on the VSync_APP signal for drawing and sending for display.

Based on the foregoing premise, referring to FIG. 11, for example, during the sliding operation of the user, the touchscreen driver collects five frames of data based on a system-triggered interrupt request, and the chess battle application obtains only three frames of data. Coordinate data corresponding to a frame 2 and a frame 3 is not sent to the batch queue because the daemon does not receive a tpVSync signal sent by the chess battle application. Because each time when the chess battle application collects coordinate data from the batch queue, only corresponding coordinate data is stored in the queue, thereby reducing a step of resampling calculation, greatly improving performance of the electronic device, reducing power consumption of the electronic device, prolonging battery usage duration of the electronic device, improving a case in which the electronic device is hot, and improving user experience.

In addition, it may be understood that to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint of the technical solutions. A person skilled in the art may use different methods to implement the described functions with reference to embodiments for each particular application, but it should not be considered that the implementation goes beyond the scope of this application.

In addition, it should be noted that, in an actual application scenario, the touchscreen coordinate data reporting method that is provided in the foregoing embodiments and that is implemented by the electronic device may alternatively be performed by a chip system included in the electronic device. The chip system may include a processor. The chip system may be coupled to a memory, so that when the chip system runs, a computer program stored in the memory is invoked to implement the foregoing steps performed by the electronic device. The processor in the chip system may be an application processor or may be a processor that is not an application processor.

In addition, an embodiment of this application further provides a computer-readable storage medium. The computer storage medium stores computer instructions. When the computer instructions are run on an electronic device, the electronic device is enabled to perform the foregoing related method steps to implement the touchscreen coordinate data reporting method in the foregoing embodiments.

In addition, an embodiment of this application further provides a computer program product. When the computer program product is run on an electronic device, the electronic device is enabled to perform the foregoing related steps to implement the touchscreen coordinate data reporting method in the foregoing embodiments.

In addition, an embodiment of this application further provides a chip (which may alternatively be a component or a module). The chip may include one or more processing circuits and one or more transceiver pins. The transceiver pin and the processing circuit communicate with each other by using an internal connection path. The processing circuit performs the foregoing related method steps to implement the touchscreen coordinate data reporting method in the foregoing embodiments, to control a receive pin to receive a signal and control a transmit pin to send a signal.

In addition, it may be learned, based on the foregoing descriptions, that each of the electronic device, the computer-readable storage medium, the computer program product, or the chip provided in the embodiments of this application is configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. A touchscreen coordinate data reporting method, applied to an electronic device, wherein the method comprises:
displaying a first interface of a first application;
in response to a sliding operation performed on the first interface, obtaining an input event corresponding to the sliding operation;
collecting, based on a preset touchscreen sampling rate, each frame of sliding data corresponding to the sliding operation, and performing coordinate calculation on each frame of sliding data to obtain coordinate data corresponding to each frame of sliding data and a first timestamp corresponding to each piece of coordinate data;
obtaining a data transmission signal, wherein the data transmission signal corresponds to a second timestamp, and the data transmission signal is a signal that is delivered by the first application based on the input event and that is used to indicate reporting of the coordinate data to the first application; and
sending coordinate data corresponding to a first timestamp that matches the second timestamp to the first application, so that the first application updates the first interface.

2. The method according to claim 1, wherein when the input event is an UP event, the first application stops sending the data transmission signal.

3. The method according to claim 1, wherein when the input event is a DOWN event, before the data transmission signal is obtained, a plurality of pieces of coordinate data are sent to the first application.

4. The method according to claim 1, wherein the sending coordinate data corresponding to a first timestamp that matches the second timestamp to the first application comprises:
comparing the second timestamp with a current system time; and
when a comparison result is less than or equal to a preset timeout threshold, determining that reception of the data transmission signal has not timed out, matching the second timestamp against the first timestamp of each piece of coordinate data, and sending coordinate data corresponding to a successfully matched first timestamp to the first application.

5. The method according to claim 4, wherein the method further comprises:
when the comparison result is greater than the preset timeout threshold, determining that reception of the data transmission signal has timed out, and sending, to the first application, coordinate data corresponding to a first timestamp that has a smallest difference from the second timestamp.

6. The method according to claim 1, wherein before the obtaining a data transmission signal, the method comprises:
obtaining a package name of the first application, and determining whether the first application is a game application based on the package name; and
when the first application is not a game application, performing the step of sending coordinate data corresponding to a first timestamp that matches the second timestamp to the first application.

7. The method according to claim 6, wherein the method further comprises:
when the first application is a game application, sending each piece of coordinate data to the first application.

8. The method according to claim 1, wherein the obtaining a data transmission signal comprises:
obtaining the data transmission signal when a vertical synchronization signal request is received, wherein
the vertical synchronization signal request is a request generated by the first application after receiving the input event.

9. The method according to claim 1, wherein the preset screen sampling rate is greater than a refresh rate of the first application.

10. The method according to claim 1, wherein when the first application enters an idle state, the first application stops sending the data transmission signal.

11. An electronic device, wherein the electronic device comprises a memory and a processor, the memory is coupled to the processor, the memory stores program instructions, and when the program instructions are executed by the processor, the electronic device is enabled to perform the touchscreen coordinate data reporting method according to any one of claims 1 to 10.

12. A computer-readable storage medium, comprising a computer program, wherein when the computer program is run on an electronic device, the electronic device is enabled to perform the touchscreen coordinate data reporting method according to any one of claims 1 to 10.
